# FASCICULE DE BREVET EUROPEEN

(11) **EP 1 072 349 B1**
(45) Date de publication et mention de la délivrance du brevet: **25.06.2003**
(21) Numéro de dépôt: 00402031.9
(22) Date de dépôt: 17.07.2000
(51) Int. Cl.: B23K 11/00

(54) **Procédé de soudage électrique d'une pièce sur une tôle composite**
Verfahren zum elektrischen Verschweissen eines Werkstückes auf einem Verbundblech
Electric welding process usable to joint a workpiece with a composite sheet

(30) Priorité: 20.07.1999 FR 9909393
(43) Date de publication de la demande: 31.01.2001
(73) Titulaire: ARO, F-72500 Château-du-Loir (FR)
(72) Inventeur: Le Gall, Patrick, 37230 Fondettes (FR)
(74) Mandataire: Bérogin, Francis

(56) Documents cités:
- CH-A- 388 486
- US-A- 3 666 910

## Description

La présente invention concerne un procédé de soudage électrique d'une pièce telle qu'une vis ou un boulon autour du perçage d'une tôle composite, dans le cas où cette tôle comporte une intercouche de matière pratiquement isolante comprise entre deux feuilles de métal. Cette vis ou boulon comportera de préférence, vis-à-vis de la tôle, un bossage annulaire ou même sphérique, facilitant le soudage par résistance.

Cette intercouche de matière pratiquement isolante peut être une matière synthétique telle qu'un polymère, et les feuilles de métal peuvent être en acier doux, par exemple pour la constitution de carters de moteurs. L'ordre de grandeur des épaisseurs mises en jeu peut être de 5/100^{ème} mm pour le polymère, qui dans ce cas est donc un film très fin, et de 7/10^{ème} mm pour les feuilles de métal. Ces tôles sont couramment dénommées tôles MPM.

Un problème se pose lorsque l'on souhaite souder des têtes de vis ou des écrous sur de telles tôles par un soudage par résistance classique, la tôle étant serrée entre deux électrodes avec interposition de la pièce à souder : le courant peut ne pas passer entre les feuilles de métal si le film de polymère assure un parfait isolement entre elles, et dans le cas contraire, la brutale élévation de la température de la tôle autour du perçage provoque une explosion due à la vaporisation brusque du polymère, avec dans certains cas une perforation de la tôle.

Par ailleurs, en utilisant des temps de soudage très longs à faibles intensités avec des électrodes plates fermées sur une seule tôle MPM, on constate que le courant passe en différents endroits de manière aléatoire, avec des zones de chauffage visibles qui se déplacent sur la surface sans prendre la direction des électrodes et sans débuter systématiquement par les bords de tôles, ce qui met en évidence les défauts internes de la tôle MPM et n'est encore pas satisfaisant.

Le but de la présente invention est de remédier à ces inconvénients de la technique antérieure, et à cet effet un procédé conforme à l'invention, du type défini au début, est caractérisé en ce que l'on effectue une opération de préchauffage de ladite tôle au voisinage dudit perçage pour en éliminer ladite matière pratiquement isolante, ensuite de quoi on procède à une opération classique de soudage par résistance de ladite pièce sur ladite tôle.

Pour certaines pièces, notamment les têtes de vis de diamètre relativement faible, on peut effectuer ladite opération de préchauffage par passage d'un courant électrique entre une contre-électrode appliquée sur la tôle du même côté que ladite pièce à souder, au voisinage dudit perçage, et une électrode appliquée soit sur ladite pièce à souder, soit sur une pièce de contact spécifique en tenant lieu, si l'on souhaite éviter tout risque de détérioration de la pièce à souder lors de la phase de préchauffage.

Cette contre-électrode peut être appliquée sur la tôle avec une dissymétrie par rapport au perçage.

Pour d'autres pièces, par exemple pour des écrous de diamètre relativement important, au contraire, il sera avantageux que ladite contre-électrode soit annulaire et entoure complètement ladite pièce à souder ou ladite pièce de contact spécifique, avec symétrie de rotation pour que le chauffage de la tôle autour du perçage soit uniforme.

Des modes d'exécution de l'invention vont maintenant être décrits à titre d'exemples nullement limitatifs, avec référence aux figures du dessin ci-annexé dans lequel :
- la figure 1 est une vue schématique de l'étape de préchauffage lorsque la pièce à souder sur la tôle est une vis de relativement faible diamètre ;
- la figure 2 est une vue schématique de l'étape de préchauffage lorsque la pièce à souder sur la tôle est un écrou de diamètre relativement important ;
- les figures 3 et 4 sont des graphiques montrant à titre de référence les possibilités de soudage de têtes de vis par une soudeuse à courant alternatif avec des efforts entre électrodes de 4000 N et 6000 N respectivement, sur une ou deux épaisseurs de tôle nue, la durée de soudage (en périodes du courant) étant indiquée en abscisses, et le courant de soudage (en kA) en ordonnées ;
- les figures 5 et 6 sont des graphiques du même genre, pour les mêmes pressions et durées de soudage, pour le soudage de têtes de vis sur des tôles MPM préchauffées conformément à l'invention ;
- la figure 7 montre, sur un graphique du même genre, l'effet d'une variation de l'intensité de préchauffage pour le soudage d'une vis, sous un effort de 180 daN ;
- la figure 8 est un graphique du même genre que ceux des figures 3 à 6, montrant les - possibilités de soudage d'un écrou de diamètre relativement important sous un effort de 2000 daN; et
- la figure 9 est une vue en coupe axiale d'une variante.

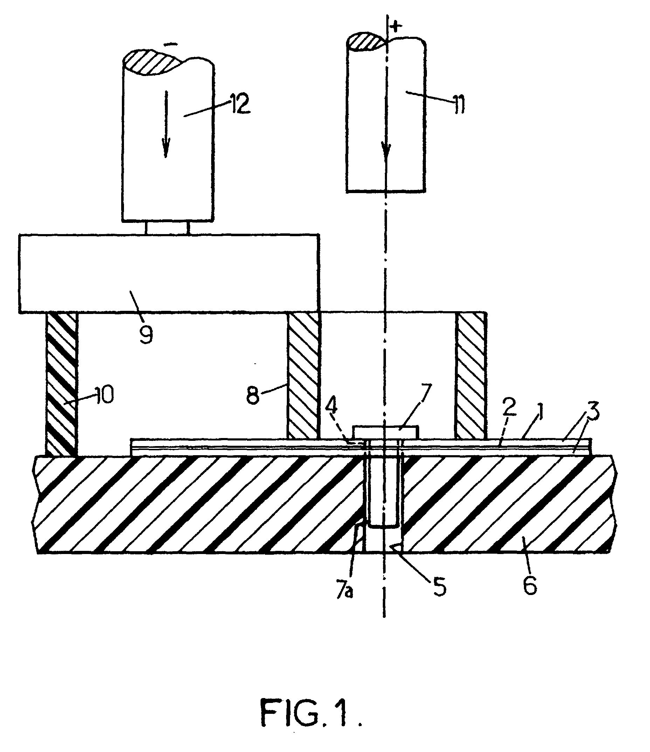

Sur la figure 1 on a référencé en 1 une tôle MPM comportant une intercouche isolante de polymère 2 comprise entre deux feuilles métalliques 3, dont les épaisseurs respectives peuvent être de l'ordre de grandeur de celles qui ont été indiquées plus haut. Un perçage 4 de cette tôle est placé en alignement avec un trou 5 d'un support isolant 6 sur lequel repose la tôle. Une vis de diamètre relativement faible 7 est engagée par sa partie filetée 7a dans le trou 5, sa tête reposant sur la surface supérieure de la tôle 1. Sur cette même surface on applique autour de la tête de la vis une contre-électrode annulaire 8. Une pièce d'appui métallique 9 repose d'une part sur cette contre-électrode, d'autre part sur un poteau isolant 10 en appui sur le support isolant 6.

Une électrode 11 d'une machine à souder, reliée par exemple à la borne positive d'une source d'alimentation en courant de préchauffage, est alors appliquée sur la tête de la vis 7, tandis qu'une autre électrode 12, reliée à la borne négative de la même source, est appliquée sur la pièce d'appui métallique 9, ce qui provoque par chauffage ohmique l'élimination rapide mais non brusque du polymère 2 dans la zone environnant la tête de la vis, sans risque de détérioration de la tôle 1.

Lorsque cette phase de préchauffage est terminée, on retire le support isolant 6 et on applique sous la tôle 1, autour de la partie filetée 7a de la vis, une électrode de soudage annulaire classique qui, en coopération avec l'électrode précitée 11, permettra d'assurer le soudage par résistance de la tête de la vis sur la tôle 1, le courant pouvant alors passer entre les deux feuilles métalliques 3.

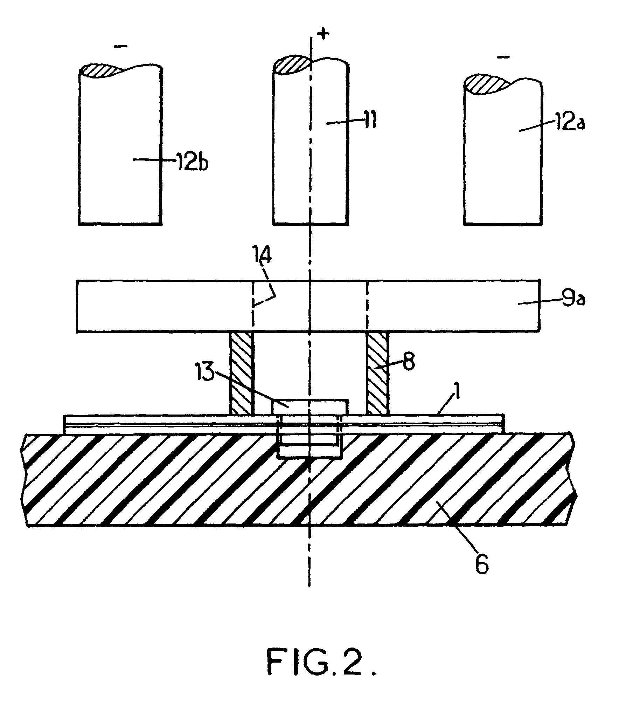

Dans l'application représentée à la figure 2, on a supposé que l'on souhaitait souder sur la tôle 1 une pièce de diamètre relativement important, telle qu'un écrou 13. Dans ce cas il peut être avantageux de remplacer la pièce d'appui métallique 9 par une pièce métallique annulaire 9a percée d'un trou 14 et appliquée par le pourtour de ce trou sur la contre-électrode annulaire 8. Le préchauffage est alors assuré en appliquant l'électrode positive 11 sur l'écrou 13 et deux électrodes négatives 12a et 12b à la périphérie de la pièce annulaire 9a; comme précédemment, le passage du courant électrique autour de l'écrou 13 provoque par effet ohmique la disparition du film de polymère dans cette zone, sans risque de détérioration de la tôle 1. Ensuite de quoi on procède au soudage de la façon connue, après retrait du support isolant 6.

Il est à noter que si l'on souhaite éviter le risque d'une détérioration de la pièce à souder 7 ou 13, on peut la remplacer pendant la phase de préchauffage par une pièce de contact spécifique occupant le même emplacement que la pièce à souder.

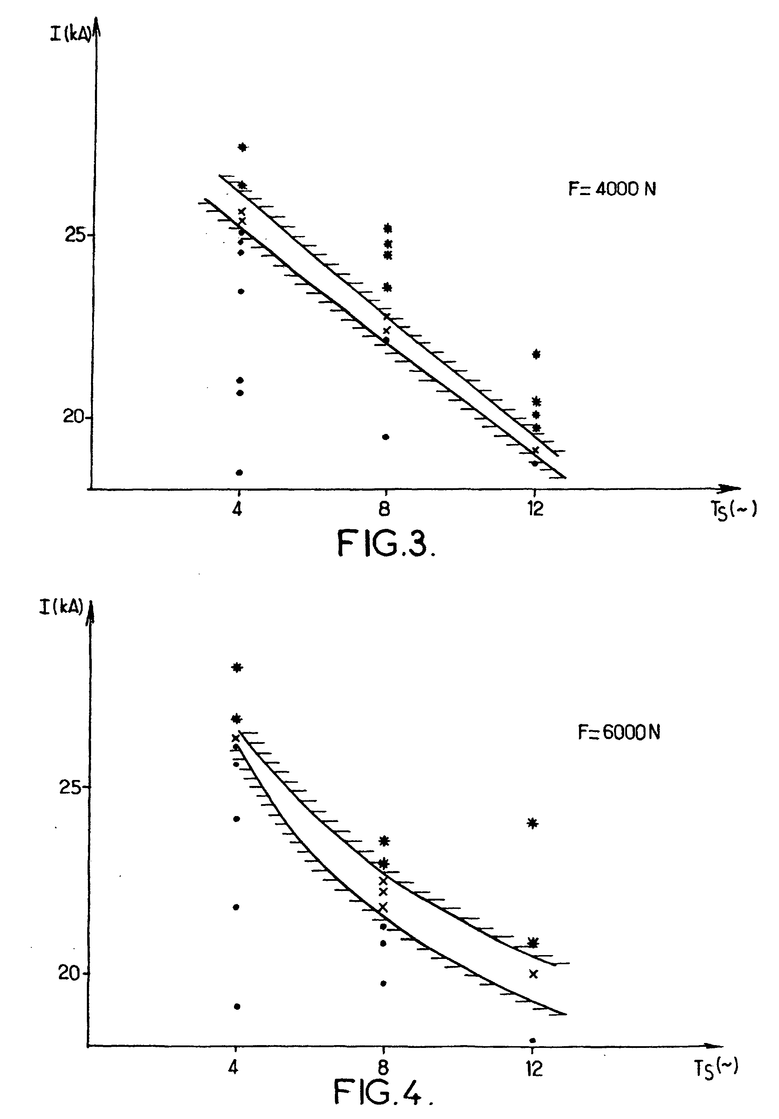

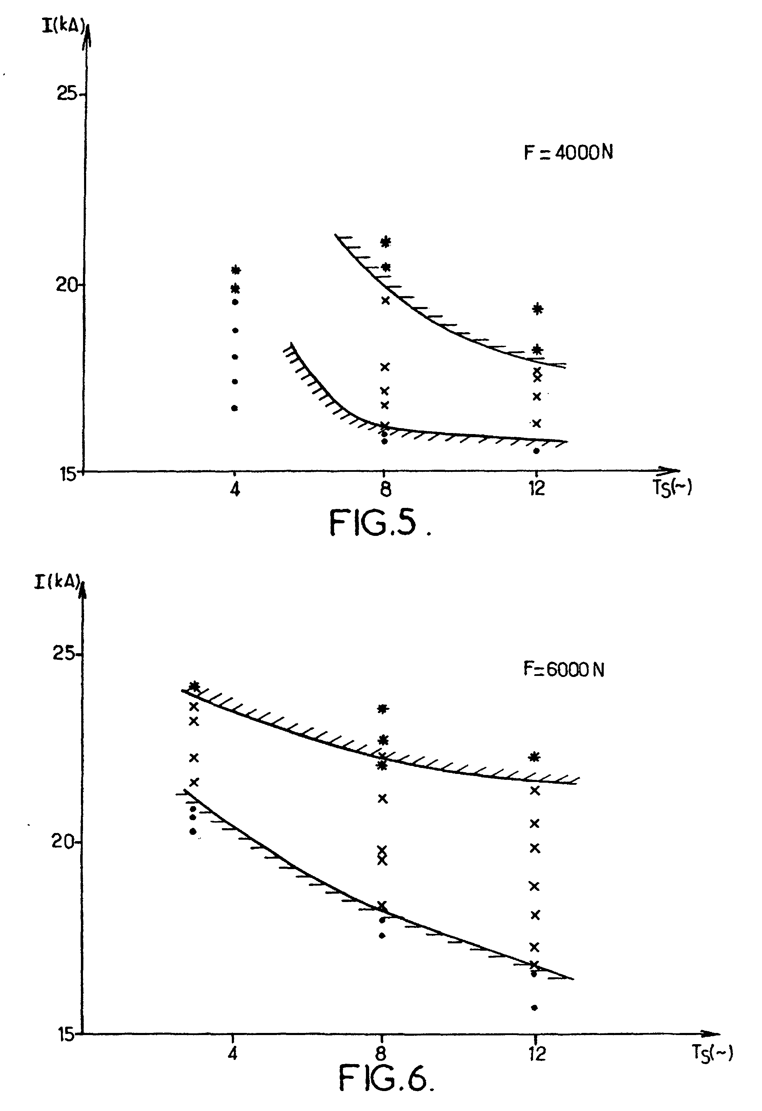

Sur les figures 3 et 4, on a représenté les paramètres et zones de soudabilité d'une tête de vis sur une épaisseur de tôle nue par des points pour un temps de soudage de 4, 8 et 12 périodes et par des croix pour les mêmes durées sur deux épaisseurs d'une telle tôle. On voit que le domaine de soudage est relativement large pour une seule épaisseur, tandis que le domaine de soudage des deux épaisseurs est très restreint, ceci pour un effort entre électrodes de 4000 N (fig. 3) et de 6000 N (fig. 4). Par contre, la limite de crachement, représentée par des astérisques, est du même ordre de grandeur pour les deux efforts.

Après préchauffage et pour les mêmes efforts, respectivement de 4000 N et 6000 N (fig.5 et 6), on constate un décalage vers les intensités de soudage plus faibles, au-dessous de 20000 A, et un domaine plus large pour le soudage des deux épaisseurs avant projections. Le soudage à 6000 N présente un domaine de soudage des deux épaisseurs plus large que celui à 4000 N.

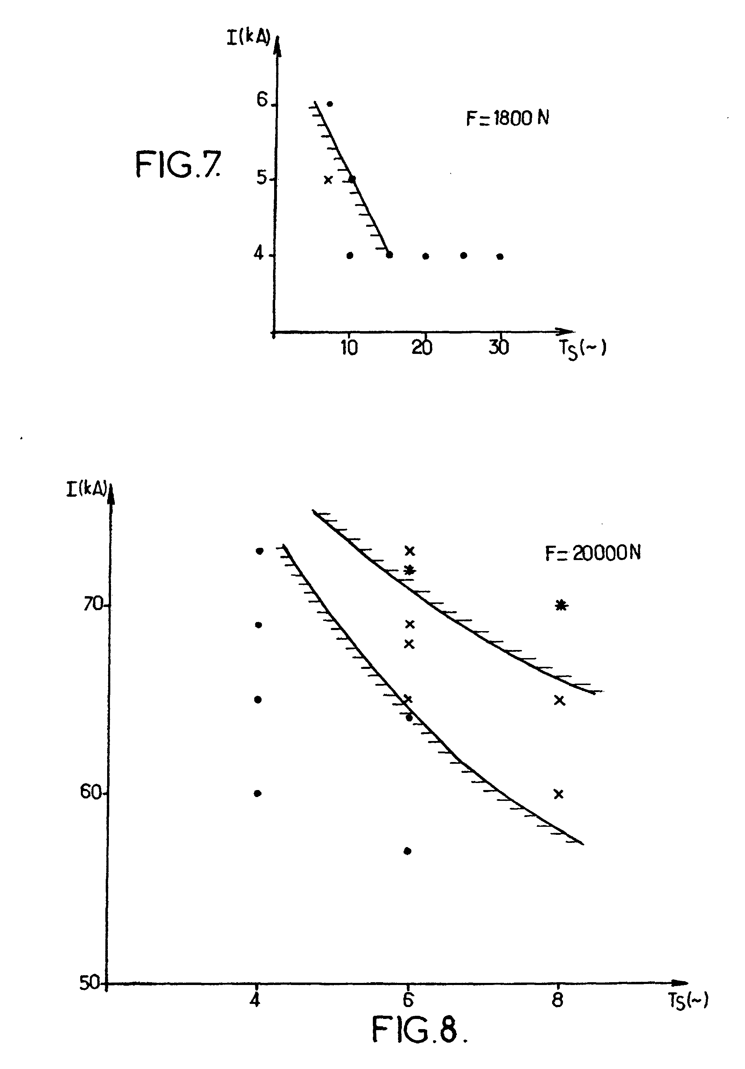

Sur le graphique de la figure 7, l'intensité de préchauffage et sa durée ont été modifiées, mais l'effort est resté inchangé, à 1800 N. La courbe donne les paramètres conduisant à un préchauffage ouvert pour le soudage à suivre. On constate que le temps de préchauffage peut être réduit sans préjudice au soudage : les tôles MPM soudées ont pu être déboutonnées avec les deux épaisseurs soudées.

La figure 8, enfin, montre les réglages utilisés pour le soudage après préchauffage d'un écrou de diamètre relativement important sous un effort de 20000 N.

Sur les figures 3 à 6 et 8, la zone des points correspond à un collage, la zone des croix à un soudage des deux épaisseurs de tôle, et la zone des astérisques à une expulsion.

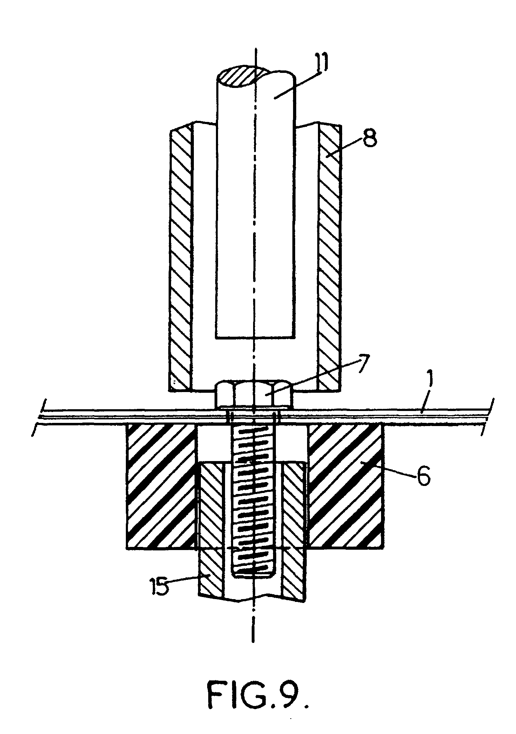

Comme représenté à la figure 9, il est également possible d'effectuer la préparation des pièces par préchauffage en faux doubles-points et leur soudage en une même opération : au début, à faible effort, une électrode supérieure concentrique 11 assure le préchauffage, ensuite de quoi l'électrode tubulaire extérieure 8 est relevée, et une électrode de soudage 15 prend place sous la pièce à souder 7.

## Revendications

1. Procédé de soudage électrique d'une pièce telle qu'une vis ou un boulon (7, 13) autour du perçage (4) d'une tôle composite (1) comportant une intercouche de matière pratiquement isolante (2) comprise entre deux feuilles de métal (3), **caractérisé en ce que** l'on effectue une opération de préchauffage de ladite tôle (1) au voisinage dudit perçage (4) pour en éliminer ladite matière pratiquement isolante, ensuite de quoi on procède à une opération classique de soudage par résistance de ladite pièce (7, 13) sur ladite tôle (1).

2. Procédé selon la revendication 1, **caractérisé en ce que** l'on effectue ladite opération de préchauffage par passage d'un courant électrique entre une contre-électrode (8) appliquée sur la tôle (1) du même côté que ladite pièce à souder (7, 13), au voisinage dudit perçage (4), et une électrode (11) appliquée soit sur ladite pièce à souder (7, 13), soit sur une pièce de contact spécifique en tenant lieu.

3. Procédé selon la revendication 2, **caractérisé en ce que** ladite contre-électrode (8) est annulaire et entoure complètement ladite pièce à souder (7, 13) ou ladite pièce de contact spécifique.

## Patentansprüche

1. Verfahren zum elektrischen Verschweißen eines Werkstückes, wie einer Schraube oder eines Bolzens (7,13) um ein Loch (4) eines Verbundbleches (1) herum, welches eine Zwischenlage eines praktisch isolierenden Materiales (2) aufweist, eingeschlossen zwischen zwei Metallfolien (3),
**dadurch gekennzeichnet,**
**daß** man eine Vorwärmoperation des genannten Bleches (1) in der Nähe des Loches (4) zur Entfernung des genannten praktisch isolierenden Materialies bewirkt und nachfolgend eine klassische Widerstandsverschweißung des genannten Stückes (7) auf dem genannten Blech (1) durchführt.

2. Verfahren nach Anspruch 1,
**dadurch gekennzeichnet,**
**daß** man die genannte Vorwärmoperation mittels Durchgang eines elektrischen Stromes bewirkt zwischen einer Konterelektrode (8), die auf dem Blech (1) auf derselben Seite wie das anzuschweißende Stück (7,13) in der Nähe des genannten Loches (4) angedrückt ist, und einer Elektrode (11), angedrückt entweder an das genannte anzuschweißende Stück (7, 11) oder an ein spezielles Kontaktstück, um es an Ort und Stelle zu halten.

3. Verfahren nach Anspruch 1 oder 2,
**dadurch gekennzeichnet,**
**daß** die genannte Gegenelektrode (8) ringförmig ausgebildet ist und vollständig das anzuschweißende Stück (7,13) oder das spezifische Kontaktstück umgibt.

## Claims

1. A method of electrically welding a part such as a screw or a bolt (7, 13) around a bore (4) of a composite sheet (1) comprising an intermediate layer of a substantially insulating material (2) disposed between two metal layers (3), **characterised in that** said sheet (1) is pre-heated in the vicinity of said bore (4) in order to remove said substantially insulating material therefrom, after which said part (7, 13) is welded onto said sheet (1) by a conventional resistance spot welding method.

2. A method as claimed in claim 1, **characterised in that** said pre-heating operation is conducted by passing an electric current between a counter-electrode (8) applied to the sheet (1) from the same side as said part (7, 13) to be welded, in the vicinity of said bore (4), and an electrode (11) applied either on said part (7, 13) to be welded, or on a specific contact member taking the place thereof.

3. A method as claimed in claim 2, **characterised in that** said counter-electrode (8) is annular and completely surrounds said part (7, 13) to be welded or said specific contact member.
